(19) Europäisches Patentamt / European Patent Office / Office européen des brevets

(11) **EP 2 528 227 B1**

(12) **FASCICULE DE BREVET EUROPEEN**

(45) Date de publication et mention de la délivrance du brevet:
**27.05.2015 Bulletin 2015/22**

(51) Int Cl.:
***H02P 27/08*** *(2006.01)*

(21) Numéro de dépôt: **12164141.9**

(22) Date de dépôt: **13.04.2012**

(54) **Dispositif de commande pour convertisseur de courant électrique alternatif-continu et son procédé de mise en oeuvre**

Steuervorrichtung für Wechselstrom-Gleichstrom-Wandler, und ihr Einsatzverfahren

Control device for AC/DC power converter and method for implementing same

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.05.2011 FR 1154590**

(43) Date de publication de la demande:
**28.11.2012 Bulletin 2012/48**

(73) Titulaire: **VALEO EQUIPEMENTS ELECTRIQUES MOTEUR**
**94046 Créteil (FR)**

(72) Inventeurs:
• **Bernard, François-Xavier**
**94000 Creteil (FR)**
• **Louise, Christophe**
**Alfortville 94140 (FR)**
• **De-Rotalier, Nicolas**
**75005 Paris (FR)**

(56) Documents cités:
**FR-A1- 2 932 330      US-A1- 2007 145 940**
**US-B1- 7 554 372      US-B1- 7 791 387**

EP 2 528 227 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention concerne un dispositif de commande pour convertisseur de courant électrique alternatif-continu et son procédé de mise en oeuvre, plus particulièrement dans le cadre d'une application dans laquelle un tel convertisseur de courant est associé à une machine électrique tournante synchrone polyphasée en étant disposé entre celle-ci et une unité de stockage d'énergie électrique, comprenant une batterie rechargeable.

L'invention s'applique plus particulièrement à des machines réversibles polyphasées, dites alterno-démarreurs, qui sont utilisées dans l'industrie automobile.

Dans le cadre de l'invention, le terme "polyphasé" concerne plus particulièrement des machines électriques tournantes triphasées ou hexaphasées, mais peut aussi concerner des machines électriques tournantes biphasées ou fonctionnant sur un nombre de phases plus élevé.

Comme il est bien connu, un alterno-démarreur comporte un rotor constituant un inducteur et un stator polyphasé portant plusieurs bobines ou enroulements qui constituent un induit et qui échangent, avec un convertisseur alternatif/continu réversible comportant des séries de transistors, une puissance électrique, ce convertisseur étant relié à une batterie rechargeable. Le stator est fixé à la structure du véhicule et il entoure le rotor qui est porté par un arbre.

L'alterno-démarreur peut fonctionner indifféremment, selon le mode choisi par l'électronique du véhicule, dans un mode alternateur ou dans un mode démarreur/moteur électrique. Dans le mode moteur électrique, l'alterno-démarreur peut assurer le démarrage du véhicule ou apporter une aide au décollage du moteur thermique, c'est-à-dire une assistance en couple temporaire par exemple pendant une accélération.

Les alterno-démarreurs trouvent particulièrement leur application dans des systèmes d'arrêt et relance du moteur d'un véhicule automobile.

Aussi longtemps que le moteur n'est pas à l'arrêt, l'alterno-démarreur fonctionne en mode alternateur dans lequel il permet, via le convertisseur alternatif/continu réversible comportant des transistors pour chacune des phases de la machine électrique, de charger la batterie du véhicule et/ou toute autre unité de stockage d'énergie par une tension continue redressée. Dans ce mode alternateur, l'alterno-démarreur permet de transformer un mouvement de rotation du rotor inducteur, dont l'arbre est entraîné en rotation par le moteur thermique du véhicule par l'intermédiaire d'une courroie d'alternateur, en un courant électrique induit dans les bobinages du stator. Le convertisseur alternatif/continu réversible permet alors de générer une tension continue pour alimenter en énergie électrique un réseau d'équipement électrique ainsi que la batterie et/ou une unité de stockage d'énergie.

Lorsque le moteur doit être relancé par le système d'arrêt et relance, l'alterno-démarreur fonctionne en mode démarreur. On alimente le stator de l'alterno-démarreur avec les tensions polyphasées générées par le convertisseur de courant précité alimenté par la batterie du véhicule et/ou par l'unité de stockage d'énergie. Dans ce mode démarreur, l'alterno-démarreur constitue un moteur électrique permettant d'entraîner en rotation, via l'arbre de rotor et la courroie d'alternateur, le moteur thermique du véhicule. On utilise l'énergie accumulée dans la batterie pour alimenter en courant le stator afin d'induire un mouvement au rotor. Le couple à appliquer au rotor, et donc le courant à fournir aux phases du stator, est une fonction sinusoïdale de la position angulaire, repérée par un angle $\theta$, du rotor par rapport au stator.

De façon connue, un dispositif de commande est destiné à élaborer une série de signaux de commande et à les transmettre aux transistors du convertisseur de courant électrique alternatif-continu réversible pour l'application de ce couple.

On connaît du document FR 2 932 330 un dispositif de commande d'un convertisseur de courant électrique dans lequel une table numérique comporte une pluralité d'emplacements de mémoire stockant des mots numériques délivrant en sortie des signaux binaires de commande avec un nombre de bits égal au nombre de phases pour commander la commutation des commutateurs de puissance du convertisseur. On peut adapter rapidement le dispositif de commande à telle ou telle machine polyphasée au nombre de phases différent, mais il convient pour cela de changer la table numérique à chaque nouvelle machine polyphasée, puisque ce type de dispositif présente l'inconvénient de figer dans une mémoire morte (ROM) le pilotage des transistors du convertisseur.

Une table correspond dès lors à un type de machine uniquement. On pourra s'adapter pour le nombre de phases variable en prévoyant une grande table numérique et utiliser le nombre de bits de sortie de cette table dont on a besoin pour coller au nombre de phases de la machine. Mais cette solution ne permet pas de s'adapter aux autres variables d'une machine à l'autre, comme un ordre de phases différent ou une valeur d'angle d'ouverture, c'est à dire la période pendant laquelle sont sollicités les commutateurs de puissance, qui soit variable.

D'une part, le besoin se fait sentir de pouvoir modifier à volonté la configuration des signaux, de façon très souple, sans augmenter significativement le coût et la complexité des circuits du dispositif de commande, notamment pour pouvoir passer d'un fonctionnement dit "pleine onde", dans lequel les transistors du convertisseur travaillent sur une période pleine de 180° (on parle alors d'angle d'ouverture de 180°), à un autre mode de fonctionnement avec un angle d'ouverture réduit, sans qu'il soit nécessaire pour cela de modifier substantiellement les circuits constituant ce dispositif de commande, voire de devoir entièrement les changer en substituant par exemple une carte complète de circuits électroniques par une autre. Une commande pleine onde systématique n'est pas toujours nécessaire puisque le courant qui est lissé par l'inductance du circuit est sinusoïdal et qu'il ne sert à rien de fournir une tension maximale sur l'ensemble d'une période donnée. On cherche à travailler sur des plages d'ouverture plus petites, à titre d'exemple de 120° au lieu de 180°. Le but est de trouver un angle optimal pour optimiser le couple et de fait tirer moins sur la batterie. Cela nécessite dans l'état de l'art connu de prévoir deux tables différentes, une première table consacrée à l'élaboration des commandes avec un angle d'ouverture maxi de 180° et une deuxième table consacrée à l'élaboration des commandes avec un angle d'ouverture plus petit, déterminé par avance. D'autres tables devront être associées pour prendre en compte autant d'angles d'ouvertures déterminés par avance.

Et d'autre part, comme il a été rappelé, dans le cadre de l'invention le terme "polyphasé" vise indifféremment des machines biphasées, triphasées, hexaphasées, de façon plus générale fonctionnant sur un nombre de phases égal à n (étant un entier supérieur à 1). Le besoin se fait donc également sentir de pouvoir accommoder ces machines diverses quel que soit le nombre n de phases, sans devoir là encore remplacer physiquement tel ou tel composant pour s'adapter à tel ou tel type de machine. Si le nombre de phases peut varier, un ordre de phase figé n'est pas non plus souhaitable puisque les machines commandées peuvent avoir le nombre et l'ordre des phases qui varient. Si le nombre de phases maximales peut être couvert par la prévision d'une table comprenant un nombre de bits supérieur au nombre de phases, il apparaît bien trop lourd de prévoir dans une ou plusieurs tables toutes les combinaisons possibles d'ordre de phases si la machine est par exemple hexaphasée.

Dans ce contexte, l'invention vise à améliorer les dispositifs de commande de convertisseur de courant, notamment dans le cadre d'application automobile à des alterno-démarreurs, en proposant un dispositif de commande associé à une machine électrique tournante polyphasée qui soit simple et peu onéreux à mettre en place, notamment en ce qu'il est particulièrement adaptable aux différents types de machine électrique.

Pour ce faire, selon une première caractéristique importante, le dispositif de commande du convertisseur de courant électrique alternatif-continu comporte un microcontrôleur et un module de commande en série, le module de commande comportant des blocs de commande en nombre égal au nombre de phases de la machine électrique, qui sont adressés respectivement d'une part par une valeur d'angle d'ouverture en provenance d'un registre de n bits du microcontrôleur et d'autre part par une valeur représentative de la position angulaire du rotor par rapport au stator. Ces blocs de commande délivrent en sortie deux signaux, à savoir une information représentative de la commande à appliquer aux commutateurs de puissance du convertisseur dans le cas d'un fonctionnement dit de pleine onde ainsi qu'une valeur de masque calculée dans le bloc de commande qui est fonction d'un angle d'ouverture déterminé. Ces deux signaux sont adaptés à être combinés par la suite pour délivrer le signal de commande aux commutateurs de puissance adapté à un fonctionnement pleine onde ou à onde réduite selon la valeur du masque.

L'invention permet ainsi de proposer un ensemble qui peut être monté sur différentes machines avec des spécifications différentes sans que soit nécessaire des modifications lourdes sur l'architecture électronique du dispositif.

Selon des caractéristiques complémentaires, la valeur d'angle d'ouverture est une valeur dynamique, adaptée à être modifié dans le registre du microcontrôleur en fonction des paramètres de fonctionnement de la machine électrique tournante.

L'avantage d'un tel dispositif de commande est de proposer une commande de convertisseur à moindre coût, simple et efficace, et qui puisse aisément s'adapter aux différentes demandes, du fait que l'angle d'ouverture pris en compte dans la réalisation des commandes n'est plus figé et qu'il peut par exemple varier en fonction de la vitesse, sans ajouter pour cela autant de tables de mémoire qu'il n'y a de valeurs différentes.

Selon une caractéristique de l'invention, le bloc de commande comporte un comparateur adapté à comparer la valeur représentative de la position angulaire à une valeur de seuil, obtenue depuis la valeur d'angle d'ouverture, et cette comparaison réalisée par le comparateur se fait sur n-2 bits.

On a ainsi un dispositif de commande qui est compact et plus facile à loger dans l'environnement de la machine électrique polyphasée, du fait de l'encombrement ici réduit du comparateur.

Selon une caractéristique de l'invention, le comparateur est adressé par n-2 bits de la valeur représentative de la position angulaire et par n-2 bits de la valeur de seuil, et il délivre en sortie un signal vers une porte logique OU exclusif, cette porte recevant également en entrée un bit de la valeur représentative de la position angulaire, distinct de ceux reçus par le comparateur afin de délivrer la valeur de masque, tandis que la valeur de pleine onde est obtenue directement par un bit de la valeur représentative de la position angulaire, distinct des bits reçus par le comparateur et distinct du bit reçu par la porte OU exclusif.

Avantageusement, la valeur de seuil est obtenue depuis la valeur d'angle d'ouverture par une succession de portes logiques formant un additionneur numérique. La valeur de seuil est calculée selon la formule Seuil = $((\text{Ouv} \oplus b_{n-2}) + b_{n-2}$ et la valeur de masque est elle obtenue à la suite selon la formule Masque = $b_{n-2} \oplus ([b_0...b_{n-3}] \geq \text{Seuil})$.

Le module de commande comporte également un bloc de logique combinatoire en sortie de chacun des blocs de commande comportant des portes logiques "ET" et des inverseurs de manière à combiner l'information de pleine onde et la valeur de masque pour délivrer le signal de commande aux commutateurs de puissance.

On observe ainsi que selon l'invention, avec une seule valeur représentative de l'angle d'ouverture pour toutes les phases et un seul comparateur par phase, les deux fonctionnant sur n-2 bits, on parvient à fabriquer l'intégralité des signaux de commande au lieu des quatre comparateurs par phase fonctionnant sur n bits qui sont en théorie nécessaires.

Le dispositif de commande comporte en outre un module de calcul de l'ordre de phase, adapté à délivrer en sortie la valeur représentative de la position angulaire du rotor adressée au module de commande, et dans lequel des additionneurs, en nombre égal au nombre de phases, reçoivent respectivement du microcontrôleur une valeur de décalage de phase qui est additionnée à la valeur ajustée de la position angulaire du rotor par rapport au stator.

On observe ainsi un autre avantage de l'invention. Le fait de relier par des connexions électriques la table aux transistors dans une céramique était perçu avant l'invention comme figeant l'ordre des phases, de telle sorte que pour s'adapter à d'éventuels changements d'ordre des phases, on câblait sur la céramique des ponts de résistance entre les connexions. Ce type d'opération n'est pas pratique car elle introduit de la diversité au niveau des composants (plus de composants et pour toutes les combinaisons). Ici, selon l'invention, les connexions électriques restent en l'état. On réalise par le calcul et non plus par une opération physique un complément de déphasage pour remettre les signaux de chaque phase dans l'ordre voulu.

Selon une caractéristique de l'invention, le dispositif de commande comporte un module d'ajustement angulaire disposé entre le module de calcul de l'ordre de phase et le microcontrôleur et dans lequel un additionneur est adapté à délivrer en sortie la valeur ajustée de la position angulaire du rotor par rapport au stator en étant adressé d'une part par le signal mesuré représentatif de la position du rotor par rapport au stator en provenance d'un module de détermination de la position angulaire et d'autre part par un angle de déphasage variable en provenance du microcontrôleur.

L'invention telle qu'elle a été définie permet ainsi de proposer un ensemble qui peut être monté sur différentes machines avec des spécifications différentes, que ce soit par rapport à l'ordre des phases, au nombre des phases, ou à la valeur de l'angle d'ouverture souhaitée, sans que soit nécessaire des modifications lourdes sur l'architecture électronique du dispositif.

La présente invention s'inscrit dans un contexte technique permettant de proposer un microcontrôleur à mémoire flash, c'est à dire une mémoire possédant les caractéristiques d'une mémoire vive mais dont les données ne disparaissent pas lors d'une mise hors tension, de sorte qu'on peut prendre en compte beaucoup de demande et qu'il faut prévoir en aval une architecture de commande adaptée.

L'invention concerne en outre un procédé de commande d'un convertisseur de courant électrique alternatif-continu dans lequel on délivre un signal de commande à des commutateurs de puissance du convertisseur par l'addition binaire d'un signal de référence pleine onde et d'une valeur de masque obtenue au moyen d'une succession de portes logiques et de comparateur à partir d'une valeur d'angle d'ouverture et d'une valeur de position angulaire du rotor par rapport au stator.

L'invention prend particulièrement effet dans le cadre d'une application à un alterno-démarreur pour véhicule automobile comportant un convertisseur de courant électrique alternatif-continu associé à une machine électrique tournante synchrone polyphasée. La machine comporte un rotor et un stator comprenant des enroulements connectés entre eux en leurs extrémités, en nombre égal aux nombres de phases, et le convertisseur de courant électrique alternatif-continu est disposé entre cette machine électrique polyphasée et une batterie rechargeable. Le convertisseur de courant électrique alternatif-continu comporte, pour chaque phase, une branche de deux commutateurs de puissance en série, dits haut et bas, disposée entre les bornes positive et négative de la batterie, le point milieu entre deux commutateurs de puissance haut et bas constituant une entrée et/ou une sortie de ce convertisseur de courant électrique alternatif-continu en étant relié aux extrémités de connexions desdits enroulements. Un dispositif de commande du convertisseur de courant tel que décrit précédemment est prévu pour délivrer en sortie deux signaux de commande respectivement destinés aux commutateurs de puissance d'une même branche du convertisseur.

D'autres caractéristiques et avantages de l'invention ressortiront à la lecture de la description qui suit d'un de ses modes de réalisation, illustrée par :

- la figure 1, qui est une vue schématique des différents composants d'une machine électrique tournante ici triphasée et de son dispositif de commande selon un mode de réalisation de l'invention,
- la figure 2, qui est une vue schématique du dispositif de commande,
- la figure 3, qui est une vue schématique du dispositif de commande de la figure 2,
- et la figure 4, qui est une disposition de diagrammes les uns au-dessus des autres illustrant, pour l'obtention d'un couple défini sur le rotor (fig.4a) sur une période donnée, les variations, en fonction de la position angulaire du rotor par rapport au stator de la machine électrique tournante, d'une commande dite de pleine onde (fig.4b), d'une valeur de masque (fig.4c), de deux signaux de commande de commutateurs de puissance en série (fig.4d et 4e).

Dans ce qui suit, sans en limiter en quoi que ce soit la portée, on se placera ci-après dans le cadre de l'application préférée de l'invention, sauf mention contraire, c'est-à-dire dans le cas d'un dispositif de commande d'un convertisseur de courant électrique alternatif-continu pour un alterno-démarreur triphasé.

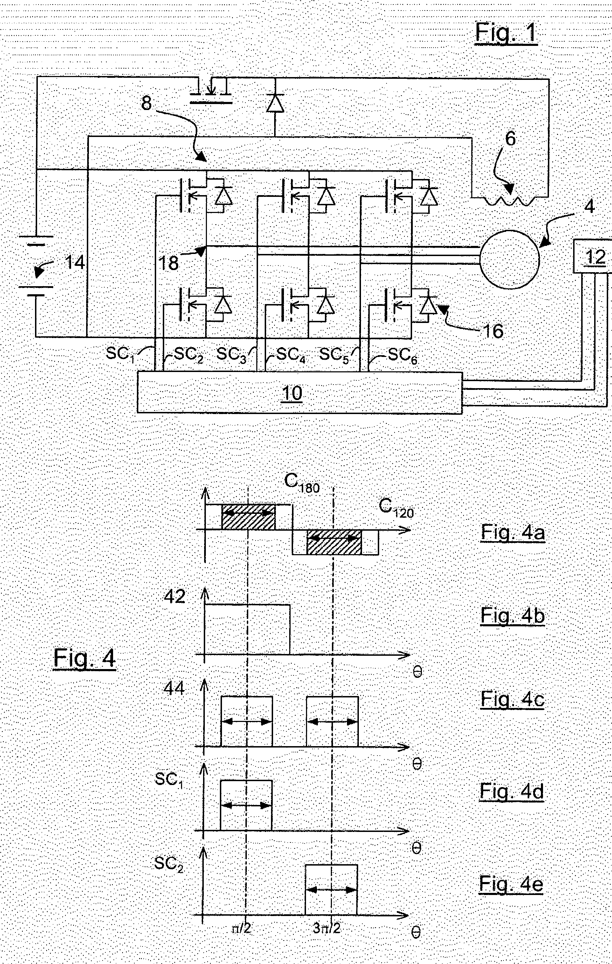

La figure 1 illustre schématiquement un dispositif d'alterno-démarreur triphasé, embarqué sur un véhicule.

Le système comporte un alterno-démarreur 2 avec un stator 4 et un rotor 6, un convertisseur de courant électrique alternatif-continu réversible 8, un dispositif de commande 10 de ce convertisseur, un module de détermination 12 de position angulaire θ du rotor par rapport au stator, et une batterie 14.

Le convertisseur comporte des commutateurs de puissance 16 formant un pont de redresseurs semi-conducteurs. En l'occurrence, s'agissant d'un alterno-démarreur triphasé, le convertisseur comprend trois branches de deux commutateurs de puissance en série formés par des transistors MOS-FET, chacune des branches étant disposée entre les pôles "-" et "+" de la batterie. Ces transistors seront dénommés ci-après, de façon arbitraire, "haut" et "bas" pour chacune des branches, et donc chacune des phases. Une telle structure est bien connue de l'Homme de Métier et il est inutile de la décrire plus avant. Les points milieux 18 des branches de sortie sont respectivement reliés à un enroulement formant bobinage du stator tandis que les extrémités des branches sont reliées aux sorties "+" et '-" de la batterie du véhicule ou de tout autre organe de stockage d'énergie électrique.

En mode alternateur, l'alterno-démarreur alimente en courant alternatif triphasé le convertisseur via les trois enroulements du stator. Le convertisseur convertit le courant alternatif triphasé, qui entre en les points milieux des branches, en un courant continu en direction de la batterie de façon à la charger.

En mode démarreur, c'est l'alterno-démarreur qui est alimenté en énergie électrique triphasée par le convertisseur réversible, qui fonctionne cette fois en mode générateur de courant triphasé depuis un courant continu en provenance de la batterie du véhicule.

Dans les deux modes, les commutateurs de puissance sont commandés selon une séquence appropriée de six signaux de commandes, $SC_1$ à $SC_6$, générés par le dispositif de commande pour que le courant délivré en sortie du convertisseur tienne compte du décalage des phases à produire ou à lisser selon le mode opérationnel.

Dans le mode démarreur, il est important que ces signaux soient générés en synchronisme avec la position angulaire θ du rotor par rapport au stator, notamment pour éviter tout risque de détérioration des composants semi-conducteurs, mais aussi et surtout pour que l'alterno-démarreur fournisse, en mode démarreur, un couple optimisé et adapté au démarrage ou à l'assistance en couple du moteur thermique, en tirant le moins possible de courant sur la batterie.

Il est nécessaire de ce fait de déterminer la position angulaire θ du rotor avec une grande précision pour obtenir un fonctionnement correct des ponts redresseurs. Le module de détermination de la position angulaire du rotor génère à cet effet un signal θ*(t)* représentant la variation instantanée de la position angulaire mesurée et il transmet ce signal en entrée du dispositif de commande. On utilise ici des capteurs à effet Hall fixes par rapport au stator de la machine électrique tournante. Ces capteurs sont aptes à délivrer une série de premiers signaux représentatifs d'un champ magnétique tournant détecté par ces capteurs. On comprendra que l'on peut indifféremment recourir à ce procédé ou à tout autre procédé connu permettant de déterminer la position angulaire du rotor avec une bonne précision.

Le module de détermination de position angulaire du rotor délivre sur sa sortie un signal θ*(t)* représentatif de cette position angulaire. Ce signal peut-être de type analogique ou de façon préférentielle de type numérique si le module est pourvu d'un circuit de conversion analogique-numérique (non représenté).

Le signal est transmis en entrée du dispositif de commande pour l'élaboration des signaux de commande $SC_1$ à $SC_6$ des éléments de commutation du convertisseur de courant électrique alternatif-continu réversible.

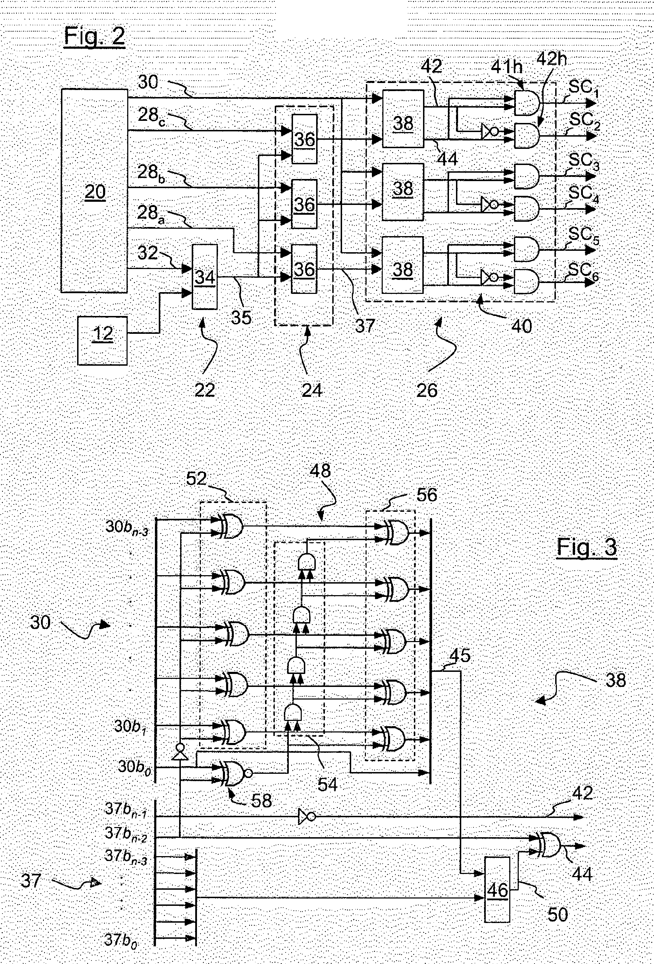

La figure 2 illustre schématiquement le dispositif de commande selon l'invention, qui va tenir compte en entrée de ce signal θ*(t)* ainsi que des paramètres enregistrés par le constructeur ou mis à jour dynamiquement, afin de délivrer en sortie les signaux de commande pour les commutateurs de puissance du convertisseur.

Le dispositif de commande comporte successivement un microcontrôleur 20, un module d'ajustement angulaire 22, un module de calcul d'ordre de phases 24 et un module de commande 26.

Le microcontrôleur est de façon connue un circuit intégré qui rassemble un processeur, des mémoires et des interfaces d'entrée et de sortie. Dans le cadre de l'application de la présente invention, le microcontrôleur est adapté particulièrement à d'une part recevoir des informations d'entrée relatives aux types de machine et d'application voulus par le client et d'autre part à configurer en fonction de ces informations les différents registres du microcontrôleur. Le microcontrôleur écrit ainsi une information dans un registre de n bits d'un port de sortie, qui maintient l'information à la disposition des circuits extérieurs via un dispositif numérique câblé.

Le microcontrôleur 20 fournit trois registres de décalage angulaire 28a à 28c, ce nombre de registres étant égal au nombre de phases de la machine, ainsi qu'un registre d'ouverture 30 qui est représentatif de l'angle d'ouverture souhaité et figé par le constructeur ou bien ajusté dynamiquement en fonction de la vitesse du véhicule par exemple. On rappelle que l'angle d'ouverture correspond à la période de phase selon laquelle on souhaite que les commutateurs de puissance délivrent une puissance électrique. Le microcontrôleur fournit en outre un angle de déphasage variable 32 qui est déterminé en fonction par exemple de la vitesse de la machine et qui permet d'adapter aux spécificités de la machine le signal de la position angulaire du rotor fourni par le module de détermination angulaire.

Le module d'ajustement angulaire 22 comporte un additionneur 34 intercalé entre le microcontrôleur 20 et le module de calcul d'ordre de phases 24. L'additionneur reçoit en entrée l'angle de déphasage variable 32 en provenance du microcontrôleur ainsi que le signal θ*(t)* représentatif de la position du rotor par rapport au stator en provenance du module de détermination de la position angulaire 12. L'information en sortie de l'additionneur est une valeur ajustée 35

de la position angulaire du rotor par rapport au stator, valeur qui peut servir au redémarrage du moteur thermique dans des conditions optimales. Cette information en sortie de l'additionneur 34 commande le module de calcul d'ordre de phase 24.

Ce module de calcul 24 comporte trois additionneurs 36, c'est à dire en nombre égal au nombre de phases de la machine électrique polyphasée, ici un alterno-démarreur triphasé. Ces additionneurs reçoivent en entrée la valeur ajustée 35 en provenance du module d'ajustement angulaire 22 ainsi qu'un registre de décalage angulaire 28a à 28c en provenance du microcontrôleur 20. On obtient ainsi en sortie de chaque additionneur une valeur de position angulaire recalculée 37 pour une phase donnée, comprenant le déphasage et le décalage.

Selon qu'il soit additionné telle ou telle valeur d'angle, par exemple 60°, 120° ou 240° pour une machine triphasée, on peut ainsi modifier l'ordre des phases et faire en sorte que ce soit telle ou telle branche qui porte l'information relative à la phase initiale de démarrage.

Le module de commande 26 est disposé en sortie des additionneurs 36 du module de calcul. Il comporte trois blocs de calcul 38 correspondant chacun à une phase et trois blocs de logique combinatoire 40 chacun disposé en sortie d'un des blocs de calcul.

Chaque bloc de calcul 38 reçoit en entrée la valeur d'angle d'ouverture 30 en provenance d'un registre du microcontrôleur 20 ainsi que la valeur de position angulaire recalculée 37 en provenance des additionneurs 34 du module de calcul d'ordre de phases 24. Tel que cela va être décrit ci-après, chaque bloc de calcul du module de commande (un par phase) transforme ces informations en entrée en une information représentative d'une commande dite pleine onde 42 et une valeur de masque 44. Ces deux données sont adaptées à être par la suite combinées pour l'obtention final des signaux de commande des transistors $SC_1$ à $SC_6$.

La figure 3 représente un des blocs de calcul 38, qui comporte un comparateur 46, une succession de portes logiques formant un additionneur numérique 48 et une porte OU exclusif (XOR) 50.

Ce bloc de calcul reçoit en premier lieu une valeur de position angulaire recalculée 37. La valeur de position angulaire 37 est codée sur n bits, référencés $37b_0$.. $37b_{n-1}$. Les n-2 premiers bits, $37b_0$.. $37b_{n-3}$, sont dirigés vers le comparateur 46. Un bit $37b_{n-2}$ de la valeur de position angulaire 37 est adressé d'une part à une entrée de la porte logique 50, qui reçoit en outre le résultat du comparateur 46, et d'autre part vers l'additionneur numérique 48 pour l'obtention de la valeur seuil 45. Enfin, le bit de poids fort $37b_{n-1}$ de la valeur de position angulaire 37 est orienté directement vers un amplificateur inverseur pour donner le signal de commande pleine onde 42, qui est donc directement obtenu comme le complément du bit de poids fort $37b_{n-1}$ de la valeur de position angulaire 37.

Le comparateur 46 reçoit en entrée la valeur de position numérique sur n-2 bits ainsi qu'une valeur de seuil 45 qui est également codée sur n-2 bits et qui est obtenue par l'additionneur numérique 48 à partir d'une part d'un bit $37b_{n-2}$ de la position angulaire du rotor qui code la période de phase en des intervalles périodiques de 90°, ce qui permet la prise en compte de la symétrie du signal à produire autour des valeurs de période de 90° et de 270°, et d'autre part d'un registre qui code sur n-2 bits, référencés $30b_0$.. $30b_{n-3}$, la valeur d'angle d'ouverture 30 sur l'intervalle correspondant de 90°.

On observe que la valeur d'angle d'ouverture est codée sur n-2 bits. Il sera compris que cette valeur codée correspond à une plage de variation de 90°, à l'exception des valeurs d'extrémités de la plage qui sont traitées séparément si nécessaire par l'ajout de bits de commande supplémentaires pour forcer le mode. Le microcontrôleur possédant des registres de taille standard n bits, les 2 bits restants dans le registre d'ouverture peuvent servir à cet effet.

Cette construction opère sur les n-2 bits de poids faible de la position angulaire du rotor. Sur un bit de position donné, on compare la valeur de position angulaire du rotor 37 à la valeur seuil 45 et on utilise le résultat de cette comparaison avec une valeur de symétrie renseigné sur le bit $37b_{n-2}$ pour en tirer la valeur de masque 44.

La valeur seuil 45 est obtenue par l'additionneur numérique simplifié 48 qui comporte une première série de porte OU exclusif 52, une série de porte ET 54, une deuxième série de porte OU exclusif 56 ainsi qu'une porte OU NON 58.

La porte logique 58 est adressée par le bit de poids faible $30b_0$ de la valeur d'angle d'ouverture et par le bit $37b_{n-2}$ de la valeur de la position angulaire et elle délivre en sortie un signal binaire inversé vers la série de porte ET 54.

Les portes logiques 52 de la première série sont adressées respectivement par un bit $30b$ de la valeur d'angle d'ouverture et par le bit $37b_{n-2}$ inversé et elles délivrent en sortie un signal numérique binaire vers la deuxième série de portes logiques OU exclusif 56, qui elles sont respectivement adressées en outre par un signal en sortie de chacune des portes ET de la série 54.

Tel qu'illustré sur la figure 2, le bloc de logique combinatoire 40 donne en sortie du module de commande, à partir des deux signaux de sortie 42 et 44, les signaux de commande SC des commutateurs et donc du transistor haut et du transistor bas pour chacune des phases de la machine. Dans le cas illustré d'une machine à trois phases, six signaux de commande sont ainsi fournis.

Chaque bloc de logique combinatoire est disposé en sortie d'un des blocs de calculs respectifs et il comporte deux portes logiques ET, 41 h et 42h, qui délivrent chacune un signal de commande SC à partir de deux signaux d'entrée élaborés depuis d'une part la valeur de masque 44 et d'autre part l'information de commande pleine onde 42 ou son inverse. La première porte logique 41 h reçoit l'information de commande pleine onde 42 et la valeur de masque 44 tandis que la deuxième porte logique 42h reçoit la valeur de masque et l'information de commande pleine onde inversée.

Il en résulte des signaux de commande des commutateurs élaborés en fonction du décalage angulaire du rotor par rapport au stator, et en fonction de la valeur d'ouverture quelle qu'elle soit, c'est à dire soit égale à 180°, soit figée à une valeur déterminée, soit variable dynamiquement en fonction de la vitesse du véhicule par exemple.

On peut voir sur les figures 4d et 4e le signal de commande (respectivement SC$_1$ et SC2 pour un transistor haut et un transistor bas d'une même branche de convertisseur) délivré par le dispositif de commande.

On peut observer que le signal SC$_1$ résulte de l'addition logique de l'information de commande pleine onde 42 et de la valeur de masque 44 tandis que le signal SC$_2$ résulte de la valeur de masque 44 et de l'information de commande pleine onde 42 inversée.

Lorsque la valeur de masque prend la valeur "0", c'est à dire lorsque l'on se trouve dans une plage dans laquelle on ne souhaite pas que les commutateurs de puissance fonctionnent, les signaux de commande SC$_1$ et SC$_2$ prennent la valeur "0" également.

Lorsque la valeur de masque prend la valeur "1", le signal de commande SC$_1$ prend la valeur "1" lorsque l'information de commande pleine onde est égale à "1" également tandis que le signal de commande SC$_2$ prend la valeur "1" lorsque l'information de commande pleine onde est égale à "0" et donc que son inverse prend la valeur "1".

On peut voir sur les figures 4a à 4c que l'information de commande pleine onde 42 (figure 4b) et la valeur de masque 44 (figure 4c) correspondent à la forme des courbes C180 (fonctionnement pleine onde) et C120 (fonctionnement à un angle d'ouverture de 120°)

L'information de commande pleine onde 42 est figée et prend toujours cette forme alors que la valeur de masque 44 change selon des paramètres déterminés par le constructeur et dont l'évolution dynamique peut être prise en compte en temps réel.

On peut voir sur la figure 4a une première courbe C180 qui représente un fonctionnement en pleine onde, dans lequel le courant est fourni pendant des demi-périodes pleines et consécutives, d'où l'indice "180" utilisé. Cette figure 4a représente également une courbe $C_{120}$ qui illustre un exemple de mode de fonctionnement à onde réduite différent du mode dit "pleine onde", dans lequel les éléments de commutation de puissance hauts et bas ne conduisent que pendant 120° sur 180° d'une alternance. L'alternance positive représente le courant fourni par un des éléments de commutation de puissance d'une branche, par exemple l'interrupteur haut (visible sur la figure 4d), tandis que l'alternance négative représente le courant fourni par l'interrupteur bas (visible sur la figure 4e).

On va décrire maintenant le procédé de mise en oeuvre du dispositif de commande de l'invention, dans le cadre d'une utilisation de l'alterno-démarreur d'un véhicule en mode démarreur, c'est à dire dans un mode de fonctionnement où l'on utilise la batterie du véhicule pour alimenter le convertisseur de courant associé à l'alterno-démarreur, en pilotant ce convertisseur par des signaux de commande adaptés à générer en sortie du convertisseur un courant déphasé pour le stator de l'alterno-démarreur.

Pour chacune des phases, on prévoit de générer ainsi un couple de deux signaux de commande pour chacun des transistors, et l'on déphase ce couple de valeurs ici de 120° dans le cas considéré (courant triphasé).

On reçoit une information initiale de la position du rotor dans laquelle il s'est arrêté par rapport au stator et on ajuste cette valeur par la prise en compte d'une valeur de déphasage fonction de paramètres dynamiques de la machine. On ajuste ainsi le calage du rotor par rapport au stator en fonction de caractéristiques propres de la machine pour optimiser le redémarrage du véhicule.

On considère ensuite cette valeur ajustée pour réorganiser l'ordre de phases de l'alterno-démarreur à piloter. Il convient de s'assurer que les signaux de commande en sortie du dispositif correspondent à la branche du convertisseur souhaité, de sorte que ce soient par exemple les signaux $SC_1$ et $SC_2$ qui commandent la phase initiale de redémarrage du moteur.

Dans tous les cas, que la position angulaire du rotor par rapport au stator ait été préalablement ajustée en décalage ou en déphasage ou bien qu'elle ne l'ait pas été, on utilise selon l'invention une donnée de position angulaire du rotor avec une valeur d'angle d'ouverture pour définir par le calcul des seuils correspondants aux moments de commutation des transistors du convertisseur, et pour adapter un signal de commande à ces seuils, afin de faire travailler l'alterno-démarreur non plus de façon constante en pleine onde mais bien dans un fonctionnement possible à onde réduite.

A la lecture de ce qui précède, on constate aisément que l'invention atteint bien les buts qu'elle s'est fixés, et qu'il est inutile de rappeler entièrement. A partir de la position numérique de la machine, c'est à dire la position angulaire du rotor par rapport au stator, on crée une position de départ par phase en additionnant numériquement une valeur angulaire contenue dans un registre renseigné par un microcontrôleur. Cette valeur angulaire fixe permet à la fois de définir l'ordre de commande des phases de la machine, et ainsi de simplifier la mécatronique en conservant une seule référence de céramique, tout en réglant le calage initial entre le rotor et le stator. Chaque position de phase ainsi obtenue est comparée à des seuils dépendants de la phase qui détermineront le temps de conduction de la branche du convertisseur, c'est à dire pour chaque phase, l'état des commutateurs de puissance.

L'invention vise à proposer un dispositif permettant d'obtenir des seuils dynamiques pour déterminer l'état des commutateurs, avec un seul registre d'ouverture renseigné par le microcontrôleur et un dispositif physique chargé de transformer cette information en des seuils symétriques autour de valeur de période de 90° et de 270°, et ce en évitant de faire calculer ces seuils par le microcontrôleur ce qui permet de ne pas le surcharger, et en évitant de prévoir quatre comparateurs.

On permet d'assurer la régularité de la commande sur une période électrique, la forme étant totalement symétrique en conservant le calage rotor-stator, en simplifiant le travail du logiciel et sans ajouter de comparateurs.

Avantageusement, dans le bloc de calcul du module de commande, la comparaison se fait uniquement sur les n-2 bits de poids faible de la position, ce qui a pour effet de réduire la taille du comparateur.

Avantageusement, l'additionneur numérique formé dans le bloc de commande par des portes logiques traite de façon binaire la valeur d'angle d'ouverture et un des bits de la valeur de position angulaire, ce qui offre une réalisation du bloc de commande simplifiée.

Avantageusement, le registre d'angle d'ouverture est dynamique c'est à dire que le mot de n-2 bits correspondant à la valeur de l'angle d'ouverture souhaitée peut être modifié en cours d'utilisation de la machine polyphasée pour s'adapter à des données reçues par le microcontrôleur comme par exemple la vitesse du véhicule.

Dans des variantes non représentées, on pourra prévoir de faire varier dynamiquement les registres relatifs à la valeur angulaire à ajouter à la position numérique de la machine ou pour calibrer la machine.

Comme cela a été précisé précédemment, l'invention n'est pas limitée à l'application préférée relative à la commande d'un convertisseur de courant électrique alternatif-continu réversible associé à un alterno-démarreur triphasé.

On comprendra que des modules peuvent être ajoutés ou enlevés du dispositif de commande illustré ci-dessus sans sortir du contexte de l'invention. A titre d'exemple, les grandeurs résultantes des différents blocs sont ici uniquement logiques et un module permettant la gestion des temps morts et de transition entre les phases pourra être prévu sans qu'il soit représenté ici.

Ainsi, sans sortir du cadre de l'invention, le dispositif s'applique à toute machine tournante polyphasée, par exemple biphasée, triphasée, hexaphasée, etc., en mode moteur (démarreur) et/ou alternateur (générateur de courant), puisque l'invention permet sans modifier la structure de la carte électronique sur laquelle sont implémentés les composants du dispositif de commande selon l'invention, de s'adapter à diverses machines électriques tournantes, ce jusqu'à n phases.

## Revendications

**1.** Dispositif de commande (10) d'un convertisseur de courant électrique alternatif-continu (8) disposé entre d'une part une machine électrique tournante synchrone polyphasée comprenant un stator (4) et un rotor (6) et d'autre part une unité de stockage d'énergie électrique continue (14), ledit dispositif de commande étant adapté à délivrer un signal de commande (SC) à des commutateurs de puissance (16) dudit convertisseur, **caractérisé en ce qu'**il comporte en série un microcontrôleur (20), adapté à délivrer au moins un registre représentatif d'une valeur d'angle d'ouverture (30) correspondant à la période de fonctionnement de chaque commutateur de puissance, et un module de commande (26) comprenant un registre donnant l'angle entre phases et des blocs de commande (38) en nombre égal au nombre de phases de ladite machine, auxquels sont adressés respectivement ladite valeur d'angle d'ouverture et une valeur représentative (37) de la position angulaire du rotor par rapport au stator, et qui sont adaptés à délivrer en sortie une information représentative de la commande à appliquer auxdits commutateurs de puissance dans le cas d'un fonctionnement dit de pleine onde (42) ainsi qu'une valeur de masque (44) calculée dans lesdits blocs de commande (38) qui est fonction d'un angle d'ouverture déterminé, ladite information et ladite valeur de masque étant adaptées à être combinées pour délivrer ledit signal de commande auxdits commutateurs de puissance adapté à un fonctionnement pleine onde ou à onde réduite selon la valeur du masque.

**2.** Dispositif de commande selon la revendication 1, **caractérisé en ce que** ladite valeur d'angle d'ouverture (30) est une valeur dynamique, adaptée à être modifié dans le registre du microcontrôleur (20) en fonction des paramètres de fonctionnement de la machine électrique tournante.

**3.** Dispositif de commande selon la revendication 1 ou 2, **caractérisé en ce que** le bloc de commande (38) comporte un comparateur (46) adapté à comparer ladite valeur représentative de la position angulaire à une valeur de seuil (45), obtenue depuis ladite valeur d'angle d'ouverture (30) initialement délivrée par le microcontrôleur (20) dans un registre de n bits, et **en ce que** la comparaison réalisée par ledit comparateur se fait sur n-2 bits.

**4.** Dispositif de commande selon la revendication 3, **caractérisé en ce que** le comparateur (46) est adressé par n-2 bits de la valeur représentative de ladite position angulaire (37) et par n-2 bits de la valeur de seuil (45), et il délivre en sortie un signal vers une porte logique OU exclusif (50), ladite porte recevant également en entrée un bit de la valeur représentative de ladite position angulaire (37), distinct de ceux reçus par le comparateur affin de délivrer ladite valeur de masque (44), tandis que la valeur de pleine onde (42) est obtenue directement par un bit de la valeur représentative de ladite position angulaire (37), distinct des bits reçus par le comparateur et distinct du bit reçu par ladite porte OU exclusif.

5. Dispositif de commande selon la revendication 2, **caractérisé en ce que** ladite valeur de seuil (45) est obtenue depuis ladite valeur d'angle d'ouverture (30) par une succession de portes logiques formant un additionneur numérique simplifié (48).

6. Dispositif de commande selon la revendication 5, **caractérisé en ce que** ladite valeur de seuil (45) est calculée selon la formulé suivante :

$$\text{Seuil} = ((\text{Ouv} \oplus b_{n-2}) + b_{n-2}$$

avec Seuil : la valeur de seuil (45)
Ouv : la valeur d'angle d'ouverture (30)
$b_{n-2}$ un bit de la valeur représentative de la position angulaire (37)
$\oplus$ : le ou exclusif logique
+ : le ET logique

7. Dispositif de commande selon la revendication 6, **caractérisé en ce que** la valeur de masque est obtenue selon la formule suivante :

$$\text{Masque} = b_{n-2} \oplus ([\, b_{0\ldots}b_{n-3}] \geq \text{Seuil}) +$$

avec : Seuil : la valeur de seuil (45)
Masque : la valeur de masque (44)
$b_{0\ldots}b_{n-3}$ : bits de valeur représentative de la position angulaire (37)
$\oplus$ : le ou exclusif logique
$\geq$ : le comparateur logique

8. Dispositif de commande selon l'une des revendications 1 à 7, **caractérisé en ce que** le module, de commande (26) comporte en outre un bloc de logique combinatoire (40) en sortie de chacun des blocs de commande (38) comportant des portes logiques "ET" et des inverseurs de manière à cortibiner ladite information de pleine onde (42) et ladite valeur de masque (44) pour délivrer ledit signal de commande (SC) auxdits commutateurs de puissance.

9. Dispositif de commande selon l'une des revendications 1 à 8, **caractérisé en ce qu'**il comporte en outre un module de calcul de l'ordre de phase (24), adapté à délivrer en sortie ladite valeur représentative de la position angulaire du rotor (37) adressée audit module de commande (26), et dans lequel des additionneurs (36), en nombre égal au nombre de phases, reçoivent respectivement du microcontrôleur (20) une valeur de décalage de phase (28) qui est additionnée à une valeur ajustée (35) de la position angulaire du rotor par rapport au stator.

10. Dispositif selon la revendication 9, **caractérisé en ce qu'**il comporte un module d'ajustement angulaire (22) disposé entre le module de calcul de l'ordre de phase (24) et le microcontrôleur (20) et dans lequel un additionneur (34) est adapté à délivrer en sortie ladite valeur ajustée (35) de la position angulaire du rotor par rapport au stator en étant adressé d'une part par le signal mesuré ($\theta(t)$) représentatif de la position du rotor par rapport au stator en provenance d'un module de détermination de la position angulaire (12) et d'autre part par un angle de déphasage variable (32) en provenance du microcontrôleur (20).

11. Alterno-démarreur pour véhicule automobile comportant un convertisseur de courant électrique alternatif-continu (8) associé à une machine électrique tournante synchrone polyphasée comprenant un stator (4) et un rotor (6) comprenant une pluralité d'enroulements connectés entre eux en leurs extrémités, en nombre égal aux nombres de phases, ledit convertisseur de courant électrique alternatif-continu étant disposé entre ladite machine électrique tournante synchrone polyphasée et une unité de stockage d'énergie électrique continue comportant des bornes dites positive et négative (14), ledit convertisseur de courant électrique alternatif-continu comprenant, pour chaque phase, une branche de deux commutateurs de puissance (16) en série, dits haut et bas, disposée entre lesdites bornes positive et négative, le point milieu (18) entre deux commutateurs de puissance, haut et bas, constituant une entrée et/ou une sortie dudit convertisseur de courant électrique alternatif continu en étant relié aux dites extrémités de connexions desdits enroulements, **caractérisé en ce qu'**il comprend un dispositif de commande (10) du convertisseur de courant selon l'une quelconque des revendications précédentes 1 à 10, adapté à délivrer en sortie deux signaux de commande (SC) respectivement destinés auxdits commutateurs de puissance d'une même branche du convertisseur (8).

## Patentansprüche

1. Steuervorrichtung (10) eines Wechselstrom-Gleichstrom-Umrichters (8), der zwischen einerseits einer einen Stator (4) und einen Rotor (6) enthaltenden mehrphasigen synchronen drehenden elektrischen Maschine und andererseits einer Speichereinheit elektrischer Gleichspannungsenergie (14) angeordnet ist, wobei die Steuervorrichtung geeignet ist, ein Steuersignal (SC) an Leistungsschalter (16) des Umrichters zu liefern, **dadurch gekennzeichnet, dass** sie in Reihe einen Mikrocontroller (20), der geeignet ist, mindestens ein für einen Öffnungswinkelwert (30) entsprechend der Betriebsperiode jedes Leistungsschalters repräsentatives Register zu liefern, und ein Steuermodul (26) enthält, das ein Register, welches den Winkel zwischen Phasen angibt, und Steuerblöcke (38) in gleicher Anzahl wie die Anzahl der Phasen der Maschine enthält, an die der Winkelöffnungswert bzw. ein für die Winkelposition des Rotors bezüglich des Stators repräsentativer Wert (37) übermittelt werden, und die geeignet sind, am Ausgang eine für die an die Leistungsschalter im Fall eines Vollwellenbetriebs (42) anzuwendenden Steuerung repräsentative Information sowie einen in den Steuerblöcken (38) berechneten Maskenwert (44) zu liefern, der von einem bestimmten Öffnungswinkel abhängt, wobei die Information und der Maskenwert geeignet sind, kombiniert zu werden, um das Steuersignal an die Leistungsschalter zu liefern, das für einen Vollwellenbetrieb oder einen Betrieb mit reduzierter Welle je nach dem Wert der Maske geeignet ist.

2. Steuervorrichtung nach Anspruch 1, **dadurch gekennzeichnet, dass** der Öffnungswinkelwert (30) ein dynamischer Wert ist, der geeignet ist, im Register des Mikrocontrollers (20) abhängig von den Betriebsparametern der drehenden elektrischen Maschine verändert werden zu werden.

3. Steuervorrichtung nach Anspruch 1 oder 2, **dadurch gekennzeichnet, dass** der Steuerblock (38) einen Komparator (46) aufweist, der geeignet ist, den für die Winkelposition repräsentativen Wert mit einem Schwellwert (45) zu vergleichen, der ausgehend von dem Öffnungswinkelwert (30) erhalten wird, der anfangs vom Mikrocontroller (20) in ein Register von n Bits geliefert wird, und dass der vom Komparator durchgeführte Vergleich über n-2 Bits erfolgt.

4. Steuervorrichtung nach Anspruch 3, **dadurch gekennzeichnet, dass** der Komparator (46) durch n-2 Bits des für die Winkelposition (37) repräsentativen Werts und durch n-2 Bits des Schwellenwerts (45) angesteuert wird und am Ausgang ein Signal an ein Exklusiv-ODER-Logikglied (50) liefert, wobei das Glied ebenfalls am Eingang ein Bit des für die Winkelposition (37) repräsentativen Werts empfängt, das sich von denjenigen unterscheidet, die vom Komparator empfangen werden, um den Maskenwert (44) zu liefern, während der Vollwellenwert (42) direkt durch ein Bit des für die Winkelposition (37) repräsentativen Werts erhalten wird, das sich von den vom Komparator empfangenen Bits und von dem vom Exklusiv-ODER-Glied empfangenen Bit unterscheidet.

5. Steuervorrichtung nach Anspruch 2, **dadurch gekennzeichnet, dass** der Schwellenwert (45) ausgehend vom Öffnungswinkelwert (30) durch eine Folge von Logikgliedern erhalten wird, die ein vereinfachtes digitales Addierglied (48) bilden.

6. Steuervorrichtung nach Anspruch 5, **dadurch gekennzeichnet, dass** der Schwellenwert (45) gemäß der folgenden Formel berechnet wird:

$$\text{Schwelle} = ((\text{Ouv} \oplus b_{n-2}) + b_{n-2}$$

mit: Schwelle: der Schwellenwert (45)
Ouv: der Öffnungswinkelwert (30)
$b_{n-2}$: ein Bit des für die Winkelposition (37) repräsentativen Werts

$\oplus$: das logische Exklusiv-Oder

+: das logische UND.

7. Steuervorrichtung nach Anspruch 6, **dadurch gekennzeichnet, dass** der Maskenwert gemäß der folgenden Formel erhalten wird:

$$\text{Maske} = b_{n-2} \oplus ([b_0 \ldots b_{n-3}] \geq \text{Schwelle}) +$$

mit: Schwelle: der Schwellenwert (45)
Maske: der Maskenwert (44)
bo ... $b_{n-3}$: Bits eines für die Winkelposition (37) repräsentativen Werts,
$\oplus$: das logische Exklusiv-Oder
$\geq$: der logische Komparator.

8. Steuervorrichtung nach einem der Ansprüche 1 bis 7, **dadurch gekennzeichnet, dass** das Steuermodul (26) außerdem einen kombinatorischen Logikblock (40) am Ausgang jedes der Steuerblöcke (38) aufweist, der "UND"-Logikglieder und Inverter aufweist, um die Vollwelleninformation (42) und den Maskenwert (44) zu kombinieren, um das Steuersignal (SC) an die Leistungsschalter zu liefern.

9. Steuervorrichtung nach einem der Ansprüche 1 bis 8, **dadurch gekennzeichnet, dass** sie außerdem ein Rechenmodul der Phasenfolge (24) aufweist, das geeignet ist, am Ausgang den für die Winkelposition des Rotors (37) repräsentativen Wert zu liefern, der an das Steuermodul (26) übermittelt wird, und wobei Addierglieder (36), in gleicher Anzahl wie die Anzahl von Phasen, je vom Mikrocontroller (20) einen Phasenverschiebungswert (28) empfangen, der zu einem angepassten Wert (35)·der Winkelposition des Rotors bezüglich des Stators addiert wird.

10. Vorrichtung nach Anspruch 9, **dadurch gekennzeichnet, dass** sie ein Winkelanpassungsmodul (22) aufweist, das zwischen dem Rechenmodul der Phasenfolge (24) und dem Mikrocontroller (20) angeordnet ist, und wobei ein Addierglied (34) geeignet ist, am Ausgang den angepassten Wert (35) der Winkelposition des Rotors bezüglich des Stators zu liefern, indem es einerseits von dem für die Position des Rotors bezüglich des Stators repräsentativen gemessenen Signal ($\theta(t)$), das von einem Bestimmungsmodul der Winkelposition (12) kommt, und andererseits von einem variablen Phasenverschiebungswinkel (32) angesteuert wird, der vom Mikrocontroller (20) kommt.

11. Starter-Generator für ein Kraftfahrzeug, der einen Wechselstrom-Gleichstrom-Umrichter (8) aufweist, der einer mehrphasigen synchronen drehenden elektrischen Maschine zugeordnet ist, die einen Stator (4) und einen Rotor (6) enthält, der eine Vielzahl von an ihren Enden miteinander verbundenen Wicklungen in einer Anzahl gleich der Anzahl von Phasen enthält, wobei der Wechselstrom-Gleichstrom-Umrichter zwischen der mehrphasigen synchronen drehenden elektrischen Maschine und einer Speichereinheit elektrischer Gleichspannungsenergie angeordnet ist, die so genannte positive und negative Klemmen (14) aufweist, wobei der Wechselstrom-Gleichstrom-Umrichter für jede Phase einen Zweig von zwei Leistungsschaltern (16) in Reihe, oberer und unterer genannt, enthält, der zwischen den positiven und negativen Klemmen angeordnet ist, wobei der Mittelpunkt (18) zwischen zwei oberen und unteren Leistungsschaltern einen Eingang und/oder einen Ausgang des Wechselstrom-Gleichstrom-Umrichters bildet, indem er mit den Verbindungsenden der Wicklungen verbunden ist, **dadurch gekennzeichnet, dass** er eine Steuervorrichtung (10) des Stromumrichters nach einem der vorhergehenden Ansprüche 1 bis 10 enthält, die geeignet ist, am Ausgang zwei Steuersignale (SC) zu liefern, die je für die Leistungsschalter eines gleichen Zweigs des Umrichters (8) bestimmt sind.

**Claims**

1. Control device (10) for AC-DC electric current converter (8) arranged between, on the one hand, a polyphase synchronous rotating electrical machine comprising a stator (4) and a rotor (6) and, on the other hand, a DC power storage unit (14), said control device being adapted to deliver a control signal (SC) to power switches (16) of said converter, **characterized in that** it comprises, in series, a microcontroller (20), suitable for delivering at least one register representative of an aperture angle value (30) corresponding to the period of operation of each power switch, and a control module (26) comprising a register giving the angle between phases and control blocks (38), in a number equal to the number of phases of said machine, to which are addressed respectively said aperture angle value and a value (37) representative of the angular position of the rotor relative to the stator, and which are adapted to deliver as output an information item representative of the control to be applied to said power switches in the case of a so-called full-wave operation (42) and a mask value (44) computed in said control blocks (38) which is a function of a determined aperture angle, said information item and said mask value being adapted to be combined to deliver said control signal to said power switches adapted to a full-wave or reduced-wave operation depending on the value of the mask.

2. Control device according to Claim 1, **characterized in that** said aperture angle value (30) is a dynamic value, suitable for being modified in the register of the microcontroller (20) as a function of the operating parameters of the rotating electrical machine.

3. Control device according to Claim 1 or 2, **characterized in that** the control block (38) comprises a comparator (46) suitable for comparing said value representative of the angular position to a threshold value (45), obtained from said aperture angle value (30) initially delivered by the microcontroller (20) in an n-bit register, and **in that** the comparison performed by said comparator is done on n-2 bits.

4. Control device according to Claim 3, **characterized in that** the comparator (46) is addressed by n-2 bits of the value representative of said angular position (37) and by n-2 bits of the threshold value (45), and it delivers as output a signal to an exclusive OR logic gate (50), said gate also receiving as input a bit of the value representative of said angular position (37), distinct from those received by the comparator in order to deliver said mask value (44), whereas the full-wave value (42) is obtained directly by a bit of the value representative of said angular position (37), distinct from the bits received by the comparator and distinct from the bit received by said exclusive OR gate.

5. Control device according to Claim 2, **characterized in that** said threshold value (45) is obtained from said aperture angle value (30) by a succession of logic gates forming a simplified numerical adder (48).

6. Control device according to Claim 5, **characterized in that** said threshold value (45) is calculated according to the following formula:

$$\mathtt{Threshold} = ((\mathtt{Ouv} \oplus b_{n-2}) + b_{n-2}$$

With:

Threshold: the threshold value (45)
Ouv : the aperture angle value (30)
$b_{n-2}$ : a bit of the value representative of the angular position (37)
$\oplus$: the logic exclusive OR
+ the logic AND

7. Control device according to Claim 6, **characterized in that** the mask value is obtained according to the following formula:

$$\mathtt{Mask} = b_{n-2} \oplus ([b_0 \ldots b_{n-3}] \geq \mathtt{Threshold}] +$$

with:

Threshold: the threshold value (45)
Mask: the mask value (44)
$b_0 \ldots b_{n-3}$: bits of the value representative of the angular position (37)
$\oplus$: the logic exclusive OR
$\geq$ the logical comparator

8. Control device according to one of Claims 1 to 7, **characterized in that** the control module (26) further comprises a combinational logic block (40) at the output of each of the control blocks (38) comprising "AND" logic gates and inverters so as to combine said full-wave information item (42) and said mask value (44) to deliver said control signal (SC) to said power switches.

9. Control device according to one of Claims 1 to 8, **characterized in that** it further comprises a module for calculating the phase order (24), suitable for delivering as output said value representative of the angular position of the rotor (37) addressed to said control module (26), and in which adders (36), in numbers equal to the number of phases, respectively receive from the microcontroller (20) a phase shift value (28) which is added to an adjusted value (35) of the angular position of the rotor relative to the stator.

10. Control device according to Claim 9, **characterized in that** it comprises an angular adjustment module (22) arranged between the module calculating the phase order (24) and the microcontroller (20) and in which an adder (34) is suitable for delivering as output said adjusted value (35) of the angular position of the rotor relative to the stator by being addressed on the one hand by the measurement signal ($\theta(t)$) representative of the position of the rotor relative to the stator from a module for determining the angular position (12) and on the other hand by a variable phase shift angle (32) from the microcontroller (20).

11. Alternator-starter for a motor vehicle comprising an AC-DC electric current converter (8) associated with a polyphase synchronous rotating electrical machine comprising a stator (4) and a rotor (6) comprising a plurality of windings interconnected at their ends, in number equal to numbers of phases, said AC-DC electric current converter being arranged between said polyphase synchronous rotating electrical machine and a DC power storage unit comprising so-called positive and negative terminals (14), said AC-DC electric current converter comprising, for each phase, a branch of two power switches (16) in series, called high and low, arranged between said positive and negative terminals, the midpoint (18) between two power switches, high and low, constituting an input and/or an output of said AC-DC electric current converter by being linked to said ends of connections of said windings, **characterized in that** it comprises a control device (10) for the current converter according to any one of the preceding Claims 1 to 10, suitable for delivering as output two control signals (SC) respectively intended for said power switches of one and the same branch of the converter (8).

Fig. 1

Fig. 4

Fig. 4a

Fig. 4b

Fig. 4c

Fig. 4d

Fig. 4e

Fig. 2

Fig. 3

**EP 2 528 227 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• FR 2932330